# EUROPÄISCHE PATENTSCHRIFT

(11) **EP 4 294 621 B1**
(45) Veröffentlichungstag und Bekanntmachung des Hinweises auf die Patenterteilung: **29.01.2025**
(21) Anmeldenummer: 23705401.0
(22) Anmeldetag: 15.02.2023
(51) Int. Cl.: B29C 45/84, G06N 20/00

(54) **VERFAHREN UND VORRICHTUNG ZUR BESTIMMUNG DES VERSCHLEISSES AN EINER VORRICHTUNG ZUR VERARBEITUNG VON KUNSTSTOFFEN**
METHOD AND DEVICE FOR DETERMINING THE WEAR ON A DEVICE FOR PROCESSING PLASTICS
PROCÉDÉ ET DISPOSITIF DE DÉTERMINATION DE L'USURE D'UN DISPOSITIF DE TRAITEMENT DE MATIÈRES PLASTIQUES

(30) Priorität: 15.02.2022 DE 102022103483
(43) Veröffentlichungstag der Anmeldung: 27.12.2023
(73) Patentinhaber: Arburg GmbH + Co KG, 72290 Loßburg (DE)
(72) Erfinder: FAULHABER, Werner, 72290 Loßburg Wittendorf (DE); KLOKE, Philipp, 72270 Baiersbronn Obertal (DE)
(74) Vertreter: RPK Patenanwälte Reinhardt und Kaufmann Partnerschaft mbB (Pforzheim)
(86) Internationale Anmeldenummer: PCT/EP2023/053767
(87) Internationale Veröffentlichungsnummer: WO 2023/156462

(56) Entgegenhaltungen:
- DE-A1- 102020 201 269
- US-A1- 2019 101 897
- US-A1- 2020 116 595
- US-A1- 2021 132 579

## Beschreibung

Die vorliegende Erfindung betrifft ein Verfahren mit den Merkmalen des Anspruches 1 zur Bestimmung des Verschleißes mindestens eines Moduls einer Vorrichtung zur Verarbeitung von Kunststoffen und anderen plastifizierbaren Massen durch einen zyklischen oder kontinuierlichen Verarbeitungsprozess und eine Vorrichtung mit den Merkmalen des Anspruches 11 zur Verarbeitung von Kunststoffen und anderen plastifizierbaren Massen durch einen zyklischen oder kontinuierlichen Verarbeitungsprozess zur Bestimmung von Verschleiß mindestens eines Moduls der Vorrichtung. Die Erfindung betrifft ebenso ein Computerprogrammprodukt mit den Merkmalen des Anspruches 12.

Die US 2020/0116595 zeigt ein Diagnose-Servicesystem zur Überwachung wenigstens einer Maschine. Eine Service-Center-Verwaltungsvorrichtung ist mit dem wenigstens einen Überwachungssystemen über ein Netzwerk verbunden. Wenigstens ein Service-Center ist mit der Service-Center-Verwaltungsvorrichtung verbunden. Mehrere Service-Terminals sind mit jedem der Service-Center über eine Service-Steuerung verbunden. Die mehreren Service-Terminals werden von jedem Responder verwendet, der eine Fehlerdiagnose der Maschine durchführen kann, und wenn ein Fehler an einer Maschine auftritt, wird eines der mehreren Service-Terminals über die Service-Center-Verwaltungsborrichtung und das mindestens eine Service-Center ausgewählt. Verfahrensgemäß kann der Verschleiß mindestens eines austauschbaren Moduls bestimmt und können verschleißbasierende Analyse- und Handlungsempfehlungen ausgegeben werden. Dazu werden Prozessparameterdaten von Prozessparametern, die prozessspezifische Informationen umfassen, zyklisch erfasst und in einem Datenspeicher der Vorrichtung gespeichert.

In der DE 10 2016 009 114 B4 ist eine Fehlerursache-Diagnosevorrichtung für eine Spritzgießmaschine offenbart, die dazu fähig ist, eine bevorstehende Fehlerursache bzw. einen bevorstehenden Fehler mit hoher Zuverlässigkeit unabhängig von dem Wissen und der Erfahrung von Analytikern vorherzusagen. Die Fehlerursache-Diagnosevorrichtung zum Erfassen eines Fehlers arbeitet auf Basis einer Eingabe von internen und externen Zustandsvariablen mittels einer Maschinenlernvorrichtung zum überwachten Lernen. Dabei umfassen die internen und externen Zustandsvariablen Informationen bezüglich des Auftretens eines Fehlers und wenigstens eine Information bezüglich einer Last auf eine Antriebseinheit der Spritzgießmaschine, einem Frequenzgang einer Achse, einem Harzdruck, einer Klemmkraft einer Form, einem alarmierenden Verlauf, einem Maschinenbetriebsverlauf, Prozessüberwachungsdaten für jeden Spritzgießzyklus, Spritzgießbedingungen und/oder Qualitätsinformationen über ein Spritzgießteil. Die Maschinenlernvorrichtung speichert zum überwachten Lernen als Ergebnis des Lernvorgangs einen internen Parameter ab, der mittels der Maschinenlernvorrichtung unter Verwendung der beim Erfassen eines Fehlers erhaltenen Zustandsvariablen erhalten wurde, wenn kein Fehler ermittelt wurde. Die Maschinenlernvorrichtung verwendet ferner als Lehrdaten einen Satz aus den Zustandsvariablen für jeden Start eines Spritzgießvorgangs und eines Alarm- oder Fehlerzustands beim Lernen. Allerdings ist die Fehlerursache-Diagnosevorrichtung bei ihrer Vorhersage auf die Einbeziehung bereits aufgetretene Fehler angewiesen, durch die die Maschinenlernvorrichtung erst in die Lage versetzt wird, Fehler aufgrund des überwachten Lernalgorithmus vorherzusagen.

Die DE 10 2016 009 114 B4 offenbart eine Fehlerursache-Diagnosevorrichtung für eine Spritzgießmaschine, die dazu fähig ist, eine bevorstehende Fehlerursache bzw. einen bevorstehenden Fehler mit hoher Zuverlässigkeit unabhängig von dem Wissen und der Erfahrung von Analytikern vorherzusagen. Die Fehlerursache-Diagnosevorrichtung zum Erfassen eines Fehlers arbeitet auf Basis einer Eingabe von internen und externen Zustandsvariablen mittels einer Maschinenlernvorrichtung zum überwachten Lernen. Dabei umfassen die internen und externen Zustandsvariablen Informationen bezüglich des Auftretens eines Fehlers und wenigstens eine Information bezüglich einer Last auf eine Antriebseinheit der Spritzgießmaschine, einem Frequenzgang einer Achse, einem Harzdruck, einer Klemmkraft einer Form, einem alarmierenden Verlauf, einem Maschinenbetriebsverlauf, Prozessüberwachungsdaten für jeden Spritzgießzyklus, Spritzgießbedingungen und/oder Qualitätsinformationen über ein Spritzgießteil. Die Maschinenlernvorrichtung speichert zum überwachten Lernen als Ergebnis des Lernvorgangs einen internen Parameter ab, der mittels der Maschinenlernvorrichtung unter Verwendung der beim Erfassen eines Fehlers erhaltenen Zustandsvariablen erhalten wurde, wenn kein Fehler ermittelt wurde. Die Maschinenlernvorrichtung verwendet ferner als Lehrdaten einen Satz aus den Zustandsvariablen für jeden Start eines Spritzgießvorgangs und eines Alarm- oder Fehlerzustands beim Lernen. Die Fehlerursache-Diagnosevorrichtung ist bei ihrer Vorhersage auf die Einbeziehung bereits aufgetretener Fehler angewiesen, durch die die Maschinenlernvorrichtung erst in die Lage versetzt wird, Fehler aufgrund des überwachten Lernalgorithmus vorherzusagen.

Die DE 101 61 633 A1 offenbart ein Verfahren zur Bereitstellung einer Schätzung eines virtuellen Alters zur Vorhersage der verbleibenden Lebensdauer einer beliebigen Vorrichtung eines gegebenen Typs. Das Verfahren umfasst die Schritte: Überwachen einer vorbestimmten Anzahl signifikanter Parameter von jeweiligen Vorrichtungen einer Trainingsmenge von Vorrichtungen des gegebenen Typs, wobei die Parameter jeweils Abnutzungsinkremente beitragen, Ermitteln von Koeffizienten eines neuronalen Netzes mit radialer Basisfunktion zur Modellierung der Abnutzungsinkremente, die aus der Trainingsmenge ermittelt werden, die bis zum Ausfall betrieben wird, und deren virtuelle Alter im Wesentlichen auf einen gewünschten Normwert normiert sind, Ableiten einer Formel für das virtuelle Alter einer Vorrichtung des gegebenen Typs aus dem neuronalen Netz mit radialer Basisfunktion und Anwenden der Formel auf die signifikanten Parameter aus einer weiteren Vorrichtung des gegebenen Typs zum Ableiten von Abnutzungsinkrementen für die weitere Vorrichtung. Das Verfahren nutzt eine Reihe von vergleichbaren Testvorrichtungen und ein neuronales Netz unter Berücksichtigung signifikanter Parameter der Testvorrichtungen sowie eines normierten Alters zur Berechnung eines tatsächlichen Lebensalters bzw. einer Restlebensdauer einer konkreten Vorrichtung. Das tatsächliche Lebensalter bzw. die Restlebensdauer der konkreten Vorrichtung wird auf Basis von Vergleichsdaten geschätzt.

In der DE 10 2016 008 750 A1 ist ein Verfahren zum Abschätzen einer erwarteten Lebensdauer eines Bauteils einer beliebigen Maschine offenbart, wobei in dem Verfahren Prozessdaten der Maschine, die beim Ausführen eines zyklischen Arbeitsschritts durch die Maschine erfasst werden, aufgezeichnet werden, die erfassten Daten an eine Datenbank übertragen werden, die in der Datenbank abgelegten Daten auf Ausfallmuster gemäß einem Ausfallmusterkatalog analysiert werden, um die erwartete Lebensdauer des Bauteils abzuschätzen, und eine Mitteilung bei Auffinden eines erkannten Ausfallmusters in den analysierten Daten ausgegeben wird. Es findet ein Vergleich mit vorab ermittelten Daten einer Datenbank statt, die Ausfallmuster von Vergleichsbauteilen enthält, um die erwartete Lebensdauer des konkreten Bauteils abzuschätzen.

Aus der DE 10 2020 102 370 A1 ist ein Verfahren bezüglich Maschinenlernen in einer Zustandsbestimmungsvorrichtung zum Bestimmen eines Betriebszustands einer Industriemaschine wie einer Spritzgießmaschine bekannt. Das Zustandsbestimmungsverfahren weist das Folgende auf: einen Datenerfassungsschritt zum Erhalten von Daten auf der Industriemaschine; einen Lerndatenextraktionsschritt zum Extrahieren von Daten, die zum Verarbeiten bezüglich Maschinenlernen von den Daten, die von der Industriemaschine erhalten werden, verwendet werden, aus den Daten, die in dem Datenerfassungsschritt erhalten werden, gemäß einer Extraktionsbedingung zum Extrahieren der Daten, die zum Verarbeiten bezüglich des Maschinenlernens verwendet werden; und einen Schritt des Ausführens des Verarbeitens bezüglich des Maschinenlernens unter Verwendung der Daten, die in dem Lerndatenextraktionsschritt extrahiert werden. Das Verfahren dient der Verbesserung des Maschinenlernens, um genauere Daten über den Betriebszustand der Maschine zu erhalten.

Der Erfindung liegt daher die Aufgabe zugrunde, ein Verfahren für eine Vorrichtung zur Verarbeitung von Kunststoffen und anderen plastifizierbaren Massen durch einen zyklischen oder kontinuierlichen Verarbeitungsprozess, eine Vorrichtung und ein Computerprogrammprodukt zur Durchführung des Verfahrens bereitzustellen, durch die der Verschleiß einzelner Modulkomponenten bzw. Module der Vorrichtung und somit insgesamt der Vorrichtung ohne vorbestimmte Vergleichsmodelle bestimmt werden kann, um die Wartung der Modulkomponenten bzw. der Module der Vorrichtung und somit insgesamt der Vorrichtung zu erleichtern, deren Einsatzbereitschaft zu verbessern und deren Lebensdauer zu erhöhen.

Diese Aufgabe wird mit einem Verfahren mit den Merkmalen des Anspruchs 1 sowie durch eine Vorrichtung mit den Merkmalen des Anspruchs 11 als auch durch ein Computerprogrammprodukt mit den Merkmalen des Anspruches 12 gelöst.

Durch das Verfahren bzw. dessen Anwendung in einer Vorrichtung zur Verarbeitung von Kunststoffen und anderen plastifizierbaren Massen durch einen zyklischen oder kontinuierlichen Verarbeitungsprozess, wird vorteilhaft die Wartung der Modulkomponenten bzw. der Module der Vorrichtung und somit insgesamt der Vorrichtung erleichtert, deren Einsatzbereitschaft verbessert und deren Lebensdauer erhöht. Insbesondere können durch das Verfahren rechtzeitig Empfehlungen zur Wartung oder zum Austausch einzelner Modulkomponenten oder kompletter Module ausgegeben werden, in denen entweder ein Austausch durch gleichwertige Modulkomponenten bzw. Module oder ein Austausch durch höherwertigere bzw. leistungsfähigere Modulkomponenten bzw. Module vorgeschlagen wird, wenn diese beispielsweise verschlissen sind bzw. wenn dadurch die Produktivität der Vorrichtung, die Lebensdauer einzelner Modulkomponenten oder kompletter Module erhöht werden kann.

Dadurch wird gegenüber dem Stand der Technik erreicht, dass Modulkomponenten bzw. Module schon bei Erkennen einer sich verschlechternden Teilequalität bzw. noch vor deren kompletten Ausfall gewartet oder ausgetauscht werden können. Bei den bisherigen Ansätzen aus dem Stand der Technik werden die Modulkomponenten bzw. Module entweder nach Ablauf einer vorbestimmten Zeit oder erst in Defektfall ausgetauscht, wodurch höhere Kosten durch den vorzeitigen Austausch noch verwendbarer Modulkomponenten bzw. Module und mehr Ausschussteile entstehen.

Dazu werden mindestens ein austauschbares Modul mit je einer Steuerung (sowie Kommunikationsschnittstellen (zwischen den Steuerungen verwendet, um an Hand technischer Parameter die Schritte des Verfahrens ggf. auch wiederholt durchzuführen. Daraus werden Handlungsempfehlungen für den weiteren Betrieb der Vorrichtung abgeleitet.

Vorteilhafte Weiterbildungen sind Gegenstand der abhängigen Patentansprüche.

In einer bevorzugten Ausführungsform des Verfahrens wird der Verschleiß für wenigstens eines der Module umfassend ein Plastifiziermodul, ein Antriebsmodul, ein Materialaustragsmodul, ein Materialzuführmodul und ein Werkzeugmodul/Objektträgermodul bestimmt. Dadurch kann vorteilhaft dem Umstand Rechnung getragen werden, dass je nach Einsatzzweck einzelne oder auch mehrere Module einem besonderen Augenmerk unterworfen werde können, um z. B. energieeffizient zu arbeiten.

Um vorteilhaft die Ergebnisse der Auswertung über eine Mensch-Maschine-Schnittstelle einem Bediener gut und bedienerfreundlich zugänglich zu machen, können in einem bevorzugten weiteren Ausführungsbeispiel die Analyse- und Handlungsempfehlung in einer Anzeigevorrichtung ausgegeben und/oder visualisiert werden.

Vorzugsweise können in einer Ausführungsform des Verfahrens die Kommunikationsschnittstellen des mindestens einen Moduls und der Vorrichtung Daten kabellos übertragen, um den Herstellungsaufwand an der Maschine zu verringern. Ebenso möglich sind auch Busverbindungen, die die Module und die Vorrichtung auf einfache Weise miteinander zur Kommunikation ggf. auch in Echtzeit verbinden.

Um vorteilhaft die Umsetzung des Verfahrens und insbesondere die Bestimmung der Verschleißparameterdaten und deren Auswertung zu erleichtern, wird bevorzugterweise in einem Ausführungsbeispiel des Verfahrens aus den Moduldaten und den gewichteten Prozessparameterdaten eine Vergleichsspannung mindestens einer der Modulkomponenten ermittelt und als Verschleißparameterdatum verwendet.

Damit die gewonnene Informationen vorteilhaft für weitere Anwendungen besser zugänglich sind und dadurch zuverlässig Verschleißdaten bestimmbar werden, werden nach einer Ausführungsform des Verfahrens die Verschleißparameterdaten in Zustandsvariablen überführt und in eine Eingabeschicht einer antrainierten Vorrichtung für maschinelles Lernen übertragen, wobei vorzugsweise die Vorrichtung für maschinelles Lernen die Analyse- und Handlungsempfehlung ausgibt.

Vorzugsweise kommen zur Beobachtung und Bestimmung des Verschleißes insbesondere die folgenden Prozessparameterdaten in Betracht, die vorteilhaft Auskunft über die Beanspruchung des jeweiligen Moduls geben können: ein Zählerstand, ein Mittelwert, ein Maximal- und Minimalwert, ein zyklusgewichteter Mittelwert, ein Arbeitsintegral, ein Einspritzdruck, ein Nachdruck, ein Staudruck, ein Drehmoment, eine Drehzahl, ein Belastungswert, eine Vergleichsspannung einer Extruderwelle, insbesondere Schneckenwelle, und/oder mindesten einer Antriebswelle, eine Vergleichsspannung, die aus einer Belastung beim Einspritzen, dem Nachdruck oder dem Dosieren ermittelt wird, ein Schneckenhub, eine Schließkraft des Werkzeugs, eine Soll- und Ist-Position sowie Soll- und Ist-Geschwindigkeit des Werkzeugs oder des Objektträgers, ein Soll- und Ist-Druck des Plastifiziermoduls, eine Tröpfchengröße oder ein Massevolumen des Materialaustragsmoduls, eine Anzahl von zugeführten Fasersträngen, eine elastische Konstante der Faserstränge, eine Dichteverteilung der Faserstränge, ein Materialkennwert des aktuell verarbeiteten Materials oder einer plastifizierbaren Masse des Materialzuführmoduls, Zeit, Zeiträume, Zeitabläufe oder ein Energieverbrauchswert einer Heizung oder Mechanik verwendet. Weitere Prozessparameterdaten sind nicht ausgeschlossen, sofern sie in einen Zusammenhang mit einem Verschleiß zu bringen sind.

Vorzugsweise wird ein Handhabungsmodul mit einer Steuerung an dem Materialzuführmodul zur Handhabung der plastifizierbaren Masse verwendet und/oder ein Handhabungsmodul mit einer Steuerung an dem Werkzeugmodul/Objektträgermodul zur Handhabung einer plastifizierten Masse und von Bauteilen verwendet, um dadurch vorteilhaft die Masse und/oder Bauteile z.B. einer selbsttätigen oder auch manuellen Bewertung zu unterziehen. An den hergestellten Bauteilen können durch eine Qualitätsbewertung ggf. ergänzende Rückschlüsse auf den Verschleiß des wenigstens eine Moduls gewonnen werden.

Das Verfahren ist bevorzugterweise auch dazu geeignet, es auf mehreren Maschinen durchzuführen und dadurch insbesondere bei gleichen Maschinenkonfigurationen, gleichen Prozessen und/oder gleichen zu verarbeitenden Materialien Cluster zu bilden und auszuwerten. Durch die so gewonnene erhöhte Datenmenge an Moduldaten und/oder gewichteten Prozessparameterdaten und/oder Verschleißparameterdaten und/oder Analyse- und Handlungsempfehlungen kann vorteilhaft eine zuverlässige Beurteilung von Verschleiß mit damit einhergehenden Handlungsempfehlungen auch für andere Maschinen und/oder Anwender geschaffen werden. Die Bewertungsmodelle können so noch weiter geschärft werden, was auch zur Herstellung qualitativ hochwertiger Bauteile beiträgt. Der Maschinen-Betreiber kann einen so generierten Algorithmus aus seiner "Modellfabrik" auf andere Produktionsstandorte ausrollen und erhält überall die gleich gute Produktqualität bei gleichzeitigem Know-how-Schutz.

Bevorzugterweise können die so erzeugten Algorithmen zumindest auszugsweise auch dem Maschinenhersteller zur Verfügung gestellt werden, sodass vorteilhaft mit derartigen Informationen die Voraussetzungen für eine zuverlässige Bewertung und Vorhersage von Verschleiß geschärft werden können.

Die genannte Aufgabe wird auch durch eine Vorrichtung zur Verarbeitung von Kunststoffen und anderer plastifizierbaren Massen gelöst, die dazu eingerichtet, ausgeführt und/oder konstruiert ist, das Verfahren auszuführen.

Ebenso wird die Aufgabe durch ein entsprechendes Computerprogrammprodukt mit einem Programmcode gelöst, der auf einem Computer lesbaren Medium gespeichert ist und zur Durchführung des Verfahrens geeignet ist.

Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Die Erfindung wird nun anhand eines in den beigefügten Figuren gezeigten Ausführungsbeispiels näher erläutert. Es zeigen:
- Fig. 1: eine erfindungsgemäße Vorrichtung mit austauschbaren Modulen, die nach einem additiven Verarbeitungsprozess arbeitet,
- Fig. 2: eine erfindungsgemäße Vorrichtung mit austauschbaren Modulen, die nach einem Spritzgießprozess arbeitet,
- Fig. 3: ein Ablaufdiagramm einzelner Verfahrensschritte,
- Fig. 4: ein Schaublid einer Prozesserweiterung.

Ausführliche Beschreibung bevorzugter Ausführungsbeispiele

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

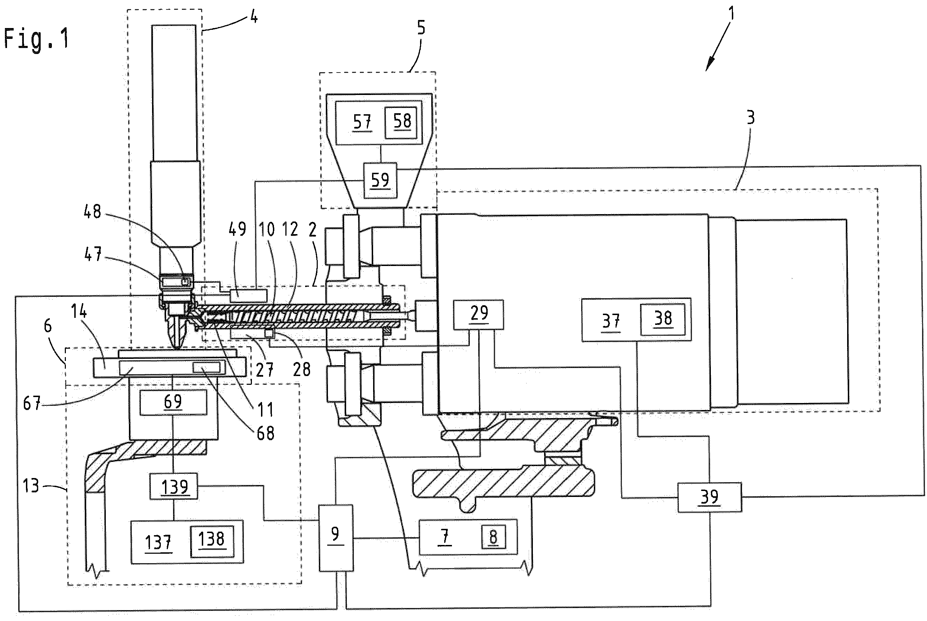

Die in Fig. 1 gezeigte Ausführungsform der erfindungsgemäßen Vorrichtung 1 zur Verarbeitung von Kunststoffen und anderen plastifizierbaren Massen durch einen zyklischen oder kontinuierlichen Verarbeitungsprozess, mit austauschbaren Modulen, die nach einem additiven Verarbeitungsprozess arbeitet, umfasst Kommunikationsschnittstellen 9, 29, 39, 49, 59, 69, 139 zwischen einer Steuerung 7 der Vorrichtung 1 und wenigstens einer Steuerung 27, 37, 47, 57, 137 eines Plastifiziermoduls 2, eines Antriebsmoduls 3, eines Materialaustragsmoduls 4, eines Materialzuführmoduls 5 und eines Werkzeugmoduls/Objektträgermoduls 6.

Der Begriff "plastifizierbare Masse" ist dabei weit zu verstehen und umfasst insbesondere, aber nicht nur, neben den genannten Kunststoffen z.B. keramische, metallische und/oder pulverige Massen ebenso wie Papier, Cellulose, Stärke, Kork, usw. sowie auch Mischmaterialen zwischen derartigen plastifizierbaren Massen. Grundsätzlich ist das Verfahren auch auf bereits zuvor plastifizierte Massen oder auch plastische Massen anwendbar, die nach dem Ausbringen selbsttätig oder unter Einsatz von Hilfsmitteln aushärten.

Unter einem zyklischen oder kontinuierlichen Verarbeitungsprozess sind insbesondere bereits bekannte Verarbeitungsprozesse zu verstehen, wie z. B. additive Verfahren zur Herstellung von Bauteilen, bei denen eine plastifizierbare Masse beispielsweise tropfenweise, also zyklisch, oder auch strangförmig ausgetragen wird, wobei additiv Stück für Stück das Bauteil hergestellt wird, oder auch z. B. Spritzgießprozesse, bei denen die plastifizierbare Masse wie z.B. Kunststoff in einen Formhohlraum eines Spritzgießwerkzeugs eingespritzt wird.

Dabei können die Verbindungen zwischen der Steuerung 7 der Vorrichtung 1 und den Steuerungen 27, 37, 47, 57, 137 der Module 2, 3, 4, 5, 6 entweder direkt oder indirekt mit zwischengeschalteten Modulen 2, 3, 4, 5, 6 hergestellt sein. Jedes der Module 2, 3, 4, 5, 6 ist innerhalb der Vorrichtung 1 austauschbar, so dass bei zunehmendem Verschleiß einzelner Module 2, 3, 4, 5, 6, 13 diese einfach entnommen und ersetzt werden können. Dies ist ein wesentlicher Vorteil gegenüber herkömmlichen Vorrichtungen dieser Art, bei denen bisher entweder kein Modulwechsel möglich ist oder eine Entnahme eines Moduls 2, 3, 4, 5, 6, 13 nach einer bestimmten vorher festgelegten Zeit des Betriebs unabhängig vom tatsächlichen Verschleißzustand des Moduls 2, 3, 4, 5, 6, 13 erfolgt. Damit wird die Wartung der Modulkomponenten bzw. der Module 2, 3, 4, 5, 6, 13 der Vorrichtung 1 und somit insgesamt der Vorrichtung 1 erleichtert, deren Einsatzbereitschaft verbessert und angemessen nach Belastung und Beanspruchung der jeweiligen Module deren Lebensdauer erhöht.

Die Vorgehensweise soll zunächst an einem Plastifiziermodul 2 einer Spritzgießmaschine als ein Beispiel auch für andere Module erläutert werden. Während des Spritzgießvorgangs wird eine Schneckenwelle 10 in einem Plastifizierzylinder 12 eines Plastifiziermoduls 2 bewegt. Durch die Rotation der Schneckenwelle 10 im Plastifizierzylinder wird plastifizierbares Material plastifiziert, homogenisiert und vor die Schneckenwelle dosiert, um durch eine anschließenden Axialhub der Schneckenwelle 10 das Material in den Formhohlraum einer in einer Formschließeinheit aufgenommenen Spritzgießform einzuspritzen, in dem das Bauteil geformt wird. Die Relativbewegung zwischen Plastifizierzylinder 12 und Schneckenwelle 10 bei Rotation und Axialbewegung der Schneckenwelle führt mit der Zeit zum Verschleiß an beiden Komponenten Plastifizierzylinder 12 und Schneckenwelle 10, der allerdings sowohl von Material und Güte dieser Komponenten als auch vom zu verarbeitenden Material und dessen Eigenschaften abhängt.

Grundsätzlich sind die Standzeiten von Plastifizierzylinder 12, Rückstromsperre 11 und Schneckenwelle 10 an sich bekannt, wird jedoch ein Plastifiziermodul 2 kontinuierlich mit einem Arbeitspunkt am Auslastungsgrad von 100%, also mit der maximal möglichen Belastung und maximal möglichem Durchsatz beaufschlagt, führt dies zu einer anderen Standzeit, als wenn die Auslastung nur 70% oder gar 50% beträgt. Ebenso führt ein abrasives und/oder mit Zusätzen, wie z.B. Fasern oder keramischen Partikeln, versehenes Material zu einem schnelleren Verschleiß als ein nicht-abrasives Material. Auch für die Materialien liegen Materialkennwerte oder Materialklassen vor, die Eingang in eine Beurteilung eines Verschleißgrades und/oder eine Vorhersage einer Standzeit gestatten. Eingang finden aber auch Betriebsdaten, wie z.B. die Zykluszeit oder die Zyklenzahl. Zu all diesen Informationen gehören aber auch Erfahrungswerte oder statistische Daten über den Betrieb von derartigen Vorrichtungen 1.

All diese Daten werden verwendet, Analyse- und Handlungsempfehlungen zu generieren. So werden z.B. der Auslastungsgrad über die Zeit aufintegriert und mit einem die Abrasivität des Materials oder der Materialklasse widerspiegelnden Faktor multipliziert. Dieses Rechenmodell kann mit der Realität abgeglichen werden, indem z.B. eine Bewertung der Komponenten des Moduls oder der Vorrichtung 1 oder eine Beurteilung der gefertigten Bauteile erfolgt.

Zu den Analyse- und Handlungsempfehlungen gehört z.B. der Hinweis der Vorrichtung, dass mit diesem Plastifiziermodul 2 - um im Beispiel zu bleiben - die gewünschte Stückzahl nicht mehr zu fertigen ist oder dass bereits 70% der maximal zu erwartenden Lebensdauer des Moduls erreicht sind. Ebenso kann die Handlungsempfehlung lauten, dass mit dieser Förderschnecke bzw. Schneckenwelle 2 dieses (abrasive) Material besser nicht verarbeitet werden sollte und eine andere Förderschnecke sich bereits im Lager befindet oder beim Hersteller geordert werden kann, d.h. es kann sich auch um Umbauempfehlungen handeln. Befinden sich zudem mehrere Maschinen im Maschinenpark, kann die Empfehlung auch lauten, doch besser dieses Bauteil unter diesen Bedingungen auf einer anderen Maschine zu fertigen.

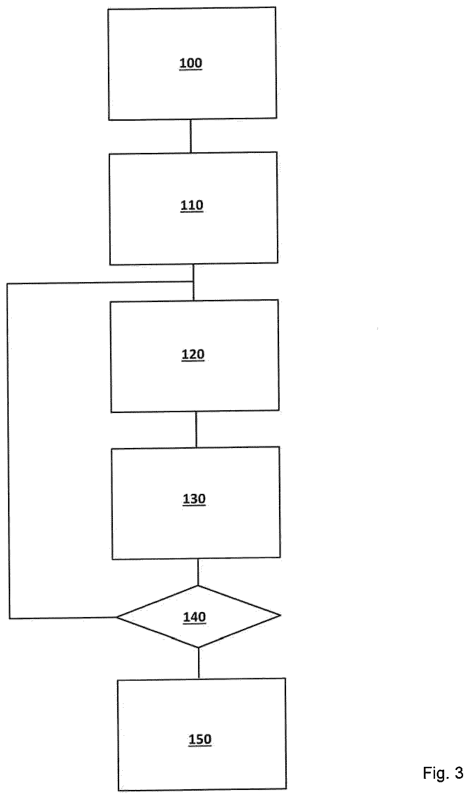

Das erfindungsgemäße Verfahren wird anhand eines in Fig. 3 dargestellten Verfahrensablaufs näher erläutert. Es umfasst in einem ersten Verfahrensschritt 110 das Bereitstellen von Moduldaten, die Informationen über verwendete Modulkomponenten umfassen, in einem Datenspeicher 28, 38, 48, 58, 138 des mindestens einen Moduls 2, 3, 4, 5, 6, 13. Diese Moduldaten werden an die Steuerung 7 der Vorrichtung 1 zum Speichern in einem Datenspeicher 8 der Vorrichtung 1 durch die Steuerung 27, 37, 47, 57, 137 des mindestens einen Moduls 2, 3, 4, 5, 6, 13 gesendet. Die Moduldaten können z. B. bereits bei der Herstellung des Moduls 2, 3, 4, 5, 6, 13 in den Datenspeicher 28, 38, 48, 58, 138 des mindestens einen Moduls 2, 3, 4, 5, 6, 13 eingespeichert werden, sie können aber ergänzend oder alternativ auch beim Betrieb des Modules erfasst und gespeichert werden, so dass sie während des Betriebs aktualisiert werden.

Denkbar ist z.B. Auslastungsparameter, Zykluszahl, Betriebsdauer, Arbeitspunkt, Materialkennwerte, usw. in der Steuerung des jeweiligen Moduls oder in der Steuerung 7 der Vorrichtung 1 zu erfassen und diese zyklisch in das jeweilige Modul zurück zu schreiben. Damit "gehören" sie dann (auch) dem Modul und wandern somit von Maschine zu Maschine mit. Denkbar wäre aber auch der umgekehrte Weg. Die Daten werden im Modul erfasst und zyklisch in die Steuerung geschrieben. Denkbar ist ebenso, dass beim Tausch einzelner Komponenten, wie z.B. einer Schneckenwelle 10 bereits erfasste Daten bei der Schneckenwelle verbleiben.

In einem zweiten Verfahrensschritt 120 erfolgt ein zyklisches Erfassen und Speichern von Prozessparameterdaten, die prozessspezifische und/oder materialspezifische Informationen umfassen, in dem Datenspeicher 28, 38, 48, 58, 138 des mindestens einen Moduls 2, 3, 4, 5, 6, 13 während des Verarbeitungsprozesses. Prozessspezifische Informationen sind Prozessparameter, wie z.B. Temperatur oder Geschwindigkeit oder Durchsatz.

Zu den Prozessparameterdaten oder besser Daten, die Einfluss auf den Prozess haben, gehören aber z.B. auch Materialkennwerte oder Materialklassen. Das zu verarbeitende Material hat je nach seiner Zusammensetzung einen mitunter erheblichen Einfluss auf den Verschleiß, wenn es sich z.B. um abrasive Stoffe, korrosive Stoffe und/oder keramische Materialien handelt. Den Materialien können auch Zusatzstoffe wie Gesteinsmehl, Einfärbemittel oder Fasern zugemischt sein oder werden, die ebenfalls Einfluss auf den Verschleiß insbesondere der Komponenten haben, die mit dem Material in Berührung kommen, wie z.B. Schneckenwelle 10, Plastifizierzylinder 12, Austragsdüse oder Verschlussdüse.

Auch der spezifische Energieverbrauch einer Heizung, eines bestimmten Moduls oder einer Mechanik ist ein Prozessparameterwert, da dieser Energieverbrauch z.B. proportional zu einem Arbeitspunkt ist. Wird ein gut eingestellter Arbeitspunkt verlassen, steigt in der Regel der Energieverbrauch. Steigt der Verschleiß, erhöht sich in der Regel auch der Energieverbrauch.

Die Prozessparameterdaten werden dann mit einem Auslastungswert und/oder einer Zykluszahl und/oder einer Betriebsdauer des Moduls 2, 3, 4, 5, 6, 13 gewichtet. Die so gewichteten Prozessparameterdaten werden einerseits in dem Datenspeicher 28, 38, 48, 58, 138 des mindestens einen Moduls 2, 3, 4, 5, 6, 13 von der Steuerung 27, 37, 47, 57, 137 des mindestens einen Moduls 2, 3, 4, 5, 6, 13 gespeichert und zusätzlich von der Steuerung 27, 37, 47, 57, 137 an die Steuerung 7 der Vorrichtung 1 zum Speichern in dem Datenspeicher 8 der Vorrichtung 1 gesendet.

Unter "zyklischem Erfassen und Speichern" ist in diesem Fall, das wiederholte diskrete, also z. B. taktgetriebene oder ereignisgetriebene, Erfassen und Speichern der o. g. Prozessparameterdaten zu verstehen. Unter Gewichten ist das Korrelieren der Prozessparameterdaten mit einem Auslastungswert und/oder einer Zykluszahl und/oder einer Betriebsdauer des Moduls 2, 3, 4, 5, 6, 13 zu verstehen.

Im Falle z. B. einer vom Auslastungsgrad der Vorrichtung 1 abhängigen Bewertung der Prozessparameterdaten ist bei einer eher mittleren Auslastung der Vorrichtung 1 beispielsweise ein hoher Verschleiß einer Modulkomponente oder eines Moduls 2, 3, 4, 5, 6, 13 anders zu bewerten als bei Vollauslastung. Bei einer mittleren Auslastung könnte ein hoher Verschleiß einer Modulkomponente oder eines Moduls 2, 3, 4, 5, 6, 13 z. B. zu einer Austauschempfehlung mit einer leistungsfähigeren Modulkomponente oder eines Moduls 2, 3, 4, 5, 6, 13 führen. Bei einer höheren Auslastung hingegen könnte dies eher zu einer Austauschempfehlung mit einer hochwertigeren Modulkomponente oder eines Moduls 2, 3, 4, 5, 6, 13 führen.

Unter Auslastungsgrad ist die Fähigkeit der Vorrichtung 1 zu verstehen, eine bestimmte Menge von Bauteilen pro Zeiteinheit mit einer vorbestimmten Qualität zu produzieren.

Weiterhin umfasst das Verfahren in einem dritten Verfahrensschritt 130 das zyklische Bestimmen von Verschleißparameterdaten aus den Moduldaten und gewichteten Prozessparameterdaten, deren Aufsummieren zu einem kumulierten Verschleißparameter und Speichern in dem Datenspeicher 8 der Vorrichtung 1 durch die Steuerung 7 der Vorrichtung 8.

In einem vierten Verfahrensschritt 140 wird von der Steuerung 7 der Vorrichtung 1 eine Analyse- und Handlungsempfehlung in dem Datenspeicher 8 der Vorrichtung 1 generiert und gespeichert, wenn der kumulierte Verschleißparameter einen in dem Datenspeicher 8 der Vorrichtung 1 gespeicherten kritischen Referenzparameter überschreitet.

Wenn bei der im Verfahrensschritt 140 erfolgten Abfrage der Referenzwert bzw. ein Wert für eine Warnstufe bereits überschritten ist, führt dies zu einem fünften Verfahrensschritt 150 mit Ausgeben der gespeicherten Analyse- und Handlungsempfehlungen. Ist er nicht erreicht wird das Verfahren an Verfahrensschritt 120 fortgesetzt, um weitere Daten zu erfassen.

Die gespeicherten Analyse- und Handlungsempfehlungen können in einer Anzeigevorrichtung 15 ausgegeben und/oder visualisiert werden.

Damit wird eine vorausschauende Wartung im Sinne von Empfehlungen zur Kontrolle oder ggf. Austausch von Komponenten der einzelnen Module 2, 3, 4, 5, 6, 13 bzw. Modulkomponenten ermöglicht, wie z. B. einer Extruderwelle bzw. einer Schneckenwelle 10, einer Rückstromsperre 11 oder eines Plastifizierzylinders 12 des Plastifiziermoduls 2 oder einer Austragsdüse oder Austragseinheit. Dadurch sind u. a. Rückschlüsse auf die Belastung der mechanischen Komponenten möglich.

Das Ziel dabei ist, z. B. individuelle Wartungen bzw. Wartungsintervalle für Getriebe und Motoren des Plastifiziermoduls 2 oder des Werkzeugmoduls/Objektträgermoduls 6 durch eine Korrelation zwischen Prozessdaten und Verschleißzustand der Module 2, 6 zu ermöglichen. Unter zyklisch ist in diesem Fall, das wiederholte diskrete, also z. B. taktgetriebene oder ereignisgetriebene, Bestimmen der o. g. Verschleißparameterdaten zu verstehen.

Die Moduldaten können z. B. die Serien- und Materialnummern der Module 2, 3, 4, 5, 6, 13 und/oder von Modulkomponenten, beispielsweise der Extruderwelle bzw. der Schneckenwelle 10, einer Rückstromsperre 11 und/oder des Plastifizierzylinders 12 des Plastifiziermoduls 2 beinhalten. Es kann sich bei den Moduldaten aber auch um z. B. einen Durchmesser der Schneckenwelle, das Material aus dem eine Modulkomponente hergestellt ist, etc. handeln. Diese Nummern können auch auf die jeweilige Modulkomponente, z. B. durch Lasern etc., aufgebracht sein. Die Moduldaten können gemäß jeweiliger Bestückung der Vorrichtung partiell ausgetauscht und somit entsprechend dem verwendeten Modul 2, 3, 4, 5, 6, 13 bzw. der Modulkomponente individualisiert sein, um z. B. die jeweilige Verwendung (Spritzgießen, Strangaustrag, Tröpfchenaustrag, etc.) der Vorrichtung entsprechend abzubilden.

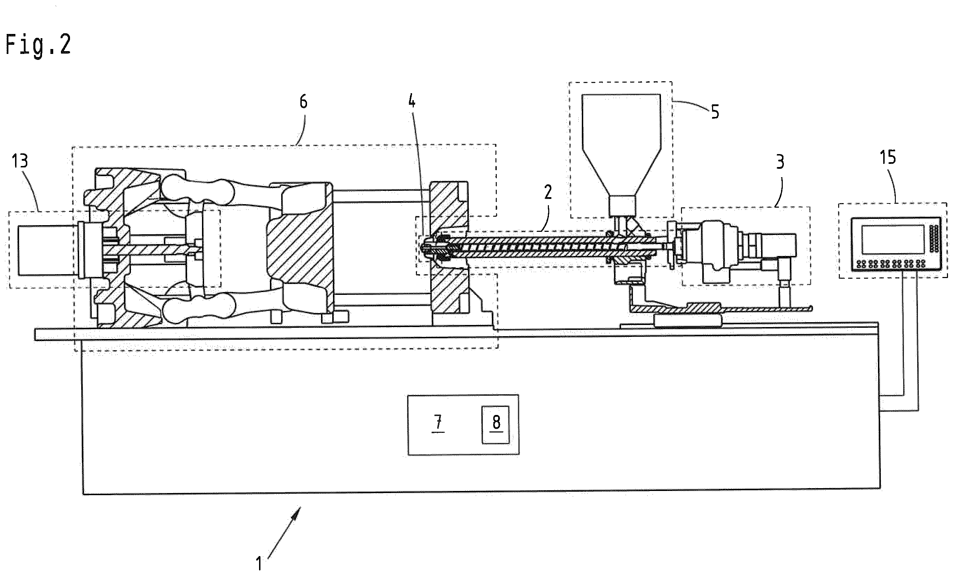

Fig. 2 zeigt eine zweite Ausführungsform der erfindungsgemäßen Vorrichtung 1 mit austauschbaren Modulen 2, 3, 4, 5, 6, 13, die nach einem Spritzgießprozess arbeitet und die oben bereits beschriebenen, für das Verfahren notwendigen Komponenten zur Steuerung 7, 27, 37, 47, 57, 137, Datenspeicherung 8, 28, 38, 48, 58, 138 und Kommunikation 9, 29, 39, 49, 59, 69, 139 aufweist sowie alle oben bereits beschriebenen, für das Verfahren notwendigen Verfahrensschritte 110, 120, 130, 140, 150 durchläuft und somit bis auf den Verarbeitungsprozess identisch ist mit der ersten Ausführungsform.

Die durch die zyklische Verarbeitung der Moduldaten und gewichteten Prozessparameterdaten bestimmten Verschleißparameterdaten sowie die daraus gewonnen kumulierten Verschleißparameter der einzelnen Module 2, 3, 4, 5, 6, 13 können auf einer Anzeigevorrichtung 15 als Historie ausgegeben und/oder visualisiert und in Bezug zu gespeicherten kritischen Referenzparameter gesetzt werden. Bei der Anzeigevorrichtung 15 handelt es sich um eine Mensch-Maschine-Schnittstelle, die auch auf andere Art und Weise ausgebildet sein kann, und auch eine Interaktion mit einer künstlichen Intelligenz auf geeignetem Kommunikationsweg ermöglichen kann.

Die aus den Daten generierte Analyse- und Handlungsempfehlung kann einem Benutzer der Vorrichtung 1 ebenso auf der Anzeigevorrichtung 15 ausgegeben und/oder visualisiert werden. Sämtliche Daten können aber auch innerhalb eines Netzwerks mit verschiedenen Vorrichtungen 1 zur Verarbeitung von Kunststoffen und anderen plastifizierbaren Massen durch einen zyklischen oder kontinuierlichen Verarbeitungsprozess und Analyse- bzw. Kontrollsystemen ausgetauscht werden. Dieses Netzwerk kann sowohl ein lokales Netzwerk als auch ein globales, z. B. cloudbasiertes, Netzwerk sein.

Bei den Prozessparameterdaten kann es sich z. B. um einen Zählerstand, einen Mittelwert, einen Maximal- und Minimalwert, einen zyklusgewichteter Mittelwert, ein Arbeitsintegral, einen Einspritzdruck, einen Nachdruck, einen Staudruck, ein Drehmoment, eine Drehzahl, einen Belastungswert, etc. handeln.

Das Verfahren bzw. die Vorrichtung 1 mit dem Verfahren erfasst damit die Belastung und den Verschleiß aller Komponenten der Vorrichtung 1, wie z. B. die Extruderwelle bzw. die Schneckenwelle 10, die Rückstromsperre 11 und den Plastifizierzylinder 12 des Plastifiziermoduls 2, die Austragsdüse des Materialaustragsmoduls 4, Fördereinheiten des Materialzuführmoduls 5, das Werkzeug/den Objektträger 14 des Werkzeugmoduls/Objektträgermoduls 6 aber auch Motoren, Getriebe, Spindelsysteme, Riemen, Lager, etc. der Antriebsmodule 3, 13 des Plastifiziermoduls 2 und des Werkzeugmoduls/Objektträgermoduls 6..

Somit kann in vorteilhafter Weise der Verschleiß für z. B. ein Plastifiziermodul 2, ein Antriebsmodul 3, ein Materialaustragsmodul 4, ein Materialzuführmodul 5 und ein Werkzeugmodul/Objektträgermodul 6 bestimmt werden.

Vorzugsweise übertragen die Kommunikationsschnittstellen 9, 29, 39, 49, 59, 69, 139 des mindestens einen Moduls 2, 3, 4, 5, 6, 13 und der Vorrichtung 1 die Daten kabellos. Ebenso möglich sind auch Busverbindungen, die die Module und die Vorrichtung auf einfache Weise miteinander zur Kommunikation verbinden.

Die Verbindung zwischen den einzelnen Knoten bzw. Kommunikationsschnittstellen 9, 29, 39, 49, 59, 69, 139 kann auf jede geeignete Weise aufgebaut sein. Im Prinzip könnten alle Steuerungen der Module sternförmig an der Steuerung 7 der Vorrichtung 1 angeschlossen sein. Alternativ können alle in einer Linie, in einem Ring, oder wie in Fig. 1 dargestellt als Baum verbunden oder in einer Mischung daraus miteinander in Kommunikationsverbindung stehen. Insofern ist die in Fig. 1 dargestellte Topologie und Anordnung nicht einschränkend. Vorzugsweise erfolgt die Verbindung in Echtzeit mit z.B. einer Zykluszeit von je nach Bus 100ms, 2ms, 250µs, wobei andere Zykluszeiten möglich sind.

Die vorteilhaft mit den Modulkomponenten bzw. den Module 2, 3, 4, 5, 6, 13 der Vorrichtung 1 in Wirkverbindung und in Kommunikation stehende Steuerung 7 der Vorrichtung 1 kann entweder innerhalb oder außerhalb der Vorrichtung 1 angeordnet. Insbesondere kann die Steuerung 7 der Vorrichtung 1 über ein Netzwerk, z. B. cloudbasiert, angebunden sein.

Vorteilhaft können die Analyse- und Handlungsempfehlung und die Prozessparameterdaten in einem externen Datenspeicher 8 gespeichert. Insbesondere kann der externe Datenspeicher 8 über ein Netzwerk, z. B. cloudbasiert, angebunden sein, um dadurch auch on edge- oder Cloud-Lösungen besser umsetzen zu können.

Vorzugsweise kann aus den Moduldaten und den gewichteten Prozessparameterdaten eine Vergleichsspannung mindestens einer der Modulkomponenten ermittelt und als Verschleißparameter verwendet werden.

Bedarfsweise werden die Verschleißparameterdaten in Zustandsvariablen überführt und in eine Eingabeschicht einer antrainierten Vorrichtung für maschinelles Lernen übertragen, wobei die Vorrichtung für maschinelles Lernen die Analyse- und Handlungsempfehlung ausgibt.

Als Prozessparameterdaten kommen alle Daten in Betracht, die für sich oder in Verbindung mit anderen Daten oder Informationen geeignet sind, eine entsprechende Bewertung insbesondere auf Verschleiß zu gestatten. Solche Prozessparameterdaten können z.B. sein: ein Zählerstand, ein Mittelwert, ein Maximal- und Minimalwert, ein zyklusgewichteter Mittelwert, ein Arbeitsintegral, ein Einspritzdruck, ein Nachdruck, ein Staudruck, ein Drehmoment, eine Drehzahl, ein Belastungswert, eine Vergleichsspannung einer Extruderwelle 10, insbesondere Schneckenwelle, und mindestens einer Antriebswelle, eine Vergleichsspannung, die aus einer Belastung beim Einspritzen, dem Nachdruck oder dem Dosieren ermittelt wird, ein Schneckenhub, eine Schließkraft des Werkzeugs 14, eine Soll- und Ist-Position sowie Soll- und Ist-Geschwindigkeit des Werkzeugs 14 oder des Objektträgers 14, ein Soll- und Ist-Druck des Plastifiziermoduls 2, eine Tröpfchengröße oder ein Massevolumen des Materialaustragsmoduls 4, eine Anzahl von zugeführten Fasersträngen, eine elastische Konstante der Faserstränge, eine Dichteverteilung der Faserstränge, ein Materialkennwert des aktuell verarbeiteten Materials oder einer plastifizierbaren Masse des Materialzuführmoduls 5, Zeit, Zeiträume, Zeitabläufe oder ein Energieverbrauchswert einer Heizung oder Mechanik.

Vorzugsweise kann ein Handhabungsmodul mit einer Steuerung an dem Materialzuführmodul 5 zur Handhabung der plastifizierbaren Masse oder ein Handhabungsmodul mit einer Steuerung an dem Werkzeugmodul/Objektträgermodul 6 zur Handhabung einer plastifizierten Masse und von Bauteilen verwendet. D. h. durch das Handhabungsmodul könnte z. B. bei einem Spritzgießverfahren ggf. an dem Werkzeugmodul überstehendes Material abgestreift oder das fertige Bauteil aus dem Werkzeugmodul entnommen werden bzw. bei einem additiven Verfahren könnte das fertige Bauteil vom Objektträgermodul entfernt werden.

Idealerweise können in größeren Spritzgießbetrieben Daten aus ähnlichen oder gleichen Maschinen, auf denen ähnliche oder gleiche Prozesse mit Materialien der ähnlichen oder gleichen Materialklasse laufen, bevorzugt "eingesammelt" werden. Dieses Zusammenfassen "on edge" und Auswerten aller Daten erlaubt es, im Rahmen eines federated learning noch bessere Algorithmen und somit ein noch besseres und zuverlässigeres Modell zur Bewertung und Vorhersage von Verschleiß einzelner oder mehrere Module zu erhalten. Der Betreiber von Anlagen kann einen so generierten Algorithmus aus seiner "Modellfabrik" auf andere Produktionsstandorte ausrollen und erhält weltweit die gleich gute Produktqualität bei gleichzeitigem KnowHow-Schutz, da er in die Lage versetzt wird, frühzeitig verschleißbedingtem Qualitätsverlust der zu fertigenden Bauteile bedarfsweise entgegenzuwirken.

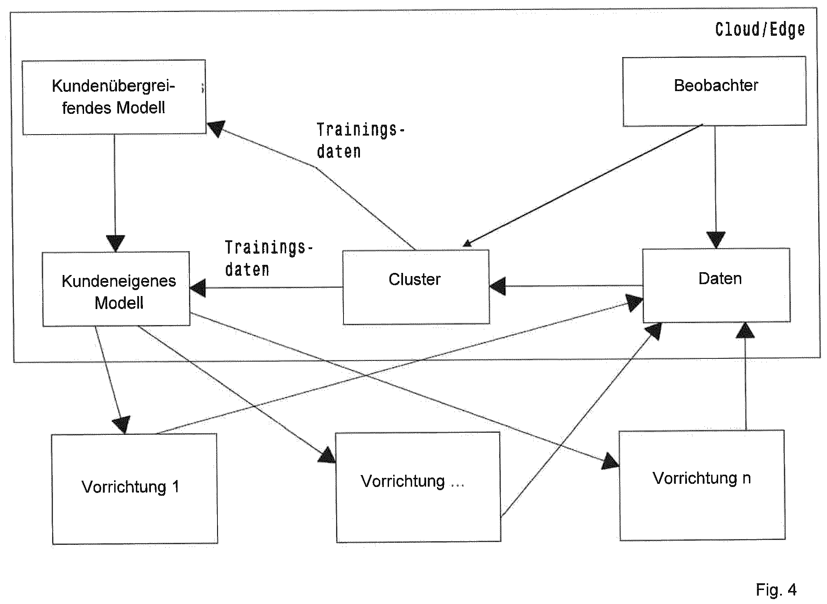

Dies wird durch das Schema der Fig. 4 näher erläutert. Der obere Teil der Figur zeigt eine Cloud/Edge-Lösung. Dazu werden gemäß Fig. 4 insbesondere folgende Daten ausgewertet:
- Moduldaten und/oder
- gewichtete Prozessparameterdaten und/oder
- Verschleißparameterdaten und/oder
- Analyse- und Handlungsempfehlungen.

Diese Daten werden von der Vorrichtung 1, ... bis zur Vorrichtung n eingesammelt und von einem Beobachter z.B. nach gleichen oder ähnlichen Maschinenkonfigurationen, gleichen Prozessen und/oder gleichen oder ähnlichen zu verarbeitenden Materialien geclustert. Diese Cluster werden ausgewertet und bilden Trainingsdaten für ein kundeneigenes Modell, insbesondere zur Bewertung und Vorhersage von Verschleiß, um durch federated learning auch andere Maschinen, z.B. im Maschinenpark des Kunden, mit den Ergebnissen der Auswertung zu betreiben. Das Modell kann insbesondere schon im Vorfeld Analyse- und Handlungsempfehlungen ausgeben, um z.B. in Kenntnis der Maschinenkonfiguration einem Anwender bei Verwendung eines abrasiven Materials im Spritzgießbetrieb eine dafür ggf. auch besser geeignete Förderschnecke zu empfehlen.

Der Maschinenhersteller ist zudem daran interessiert, dass der Maschinenbetreiber zumindest Extrakte der "on edge" erzeugten Algorithmen in die Cloud des Maschinenherstellers bereitstellt. Dieser sammelt von möglichst vielen Maschinenbetreibern (Kunden) die Extrakte der Algorithmen, d.h., das an Inhalten, was von Kunden freigegeben wird, vergleicht diese und schärft somit die Generierung eines kundenübergreifenden Modells (Deep learning).

Die hinsichtlich des Verfahrens angeführten Vorteile stellen sich auch bei einer Vorrichtung 1 zur Verarbeitung von Kunststoffen und anderer plastifizierbarer Massen ein, wobei die Vorrichtung 1 mindestens ein austauschbares Modul 2, 3, 4, 5, 6, 13 aufweist und die Vorrichtung 1 und das mindestens eine austauschbare Modul 2, 3, 4, 5, 6, 13 jeweils eine Steuerung 27, 37, 47, 57, 137; 7 sowie Kommunikationsschnittstellen 9, 29, 39, 49, 59, 69, 139 zwischen den Steuerungen 27, 37, 47, 57, 137; 7 aufweisen und wobei das mindestens eine austauschbare Modul einen Datenspeicher 28, 38, 48, 58, 138 aufweist, sofern die Vorrichtung 1 eingerichtet, ausgeführt und/konstruiert ist, um das Verfahren entsprechend auszuführen.

Ebenso stellen sich die verfahrensgemäßen Vorteile bei der Verwendung eines Computerprogrammprodukts mit einem Programmcode ein, der auf einem Computer lesbaren Medium gespeichert ist, umfassend Befehle, die bewirken, dass die Vorrichtung 1 das Verfahren unter Verwendung des Programmcodes durchführt.

### Bezugszeichenliste

- 1: Vorrichtung zur Verarbeitung von plastifizierbaren Massen
- 2: Plastifiziermodul
- 27: Steuerung von 2
- 28: Datenspeicher von 2
- 29: Kommunikationsschnittstelle zwischen 2 und 3
- 3: Antriebsmodul von 2
- 37: Steuerung von 3
- 38: Datenspeicher von 3
- 39: Kommunikationsschnittstelle zwischen 3 und 7
- 4: Materialaustragsmodul
- 47: Steuerung von 4
- 48: Datenspeicher von 4
- 49: Kommunikationsschnittstelle zwischen 4 und 2
- 5: Materialzuführmodul
- 57: Steuerung von 5
- 58: Datenspeicher von 5
- 59: Kommunikationsschnittstelle zwischen 5 und 2
- 6: Werkzeugmodul/Objektträgermodul
- 67: Steuerung von 6
- 68: Datenspeicher von 6
- 69: Kommunikationsschnittstelle zwischen 6 und 13
- 7: Steuerung von 1
- 8: Datenspeicher von 1
- 9: Kommunikationsschnittstelle zwischen 1 und 13
- 10: Extruderwelle/Schneckenwelle des Plastifiziermoduls
- 11: Rückstromsperre des Plastifiziermoduls
- 12: Plastifizierzylinder
- 13: Antriebsmodul des Werkzeugmoduls/Objektträgermoduls
- 137: Steuerung von 13
- 138: Datenspeicher von 13
- 139: Kommunikationsschnittstelle zwischen 13 und 6
- 14: Werkzeug/Objektträger
- 15: Anzeigevorrichtung
- 110,120,130,140,150: Verfahrensschritt

## Patentansprüche

1. Verfahren zur Bestimmung des Verschleißes mindestens eines austauschbaren Moduls (2, 3, 4, 5, 6, 13) einer Vorrichtung (1) zur Verarbeitung von Kunststoffen und anderen plastifizierbaren Massen durch einen zyklischen oder kontinuierlichen Verarbeitungsprozess und zur Ausgabe von verschleißbasierenden Analyse- und Handlungsempfehlungen, wobei die Vorrichtung (1) mindestens ein austauschbares Modul (2, 3, 4, 5, 6, 13) aufweist und wobei die Vorrichtung (1) eine Steuerung sowie Kommunikationsschnittstellen aufweist, umfassend ein zyklisches Erfassen und Speichern von Prozessparameterdaten von Prozessparametern, die prozessspezifische Informationen umfassen, in einem Datenspeicher (8) der Vorrichtung,
**dadurch gekennzeichnet, dass** die Vorrichtung (1) und das mindestens eine austauschbare Modul (2, 3, 4, 5, 6, 13) jeweils eine Steuerung (27, 37, 47, 57, 137; 7) sowie Kommunikationsschnittstellen (9, 29, 39, 49, 59, 69, 139) zwischen den Steuerungen (27, 37, 47, 57, 137; 7) aufweisen, **gekennzeichnet durch** die Schritte:
- Bereitstellen von Moduldaten, die Informationen über verwendete Modulkomponenten umfassen, in einem Datenspeicher (28, 38, 48, 58, 138) des mindestens einen Moduls (2, 3, 4, 5, 6, 13) sowie Senden der Moduldaten an die Steuerung (7) der Vorrichtung (1) zum Speichern in dem Datenspeicher (8) der Vorrichtung (1) durch die Steuerung (27, 37, 47, 57, 137) des mindestens einen Moduls (2, 3, 4, 5, 6, 13),
- zyklisches Erfassen und Speichern von Prozessparameterdaten von Prozessparametern der Vorrichtung, welche Prozessparameterdaten prozessspezifische und/oder materialspezifische Informationen umfassen, in dem Datenspeicher (28, 38, 48, 58, 138) des mindestens einen Moduls (2, 3, 4, 5, 6, 13) während des Verarbeitungsprozesses durch die Steuerung (27, 37, 47, 57, 137) des mindestens einen Moduls (2, 3, 4, 5, 6, 13),
- Gewichten der Prozessparameterdaten mit einem Auslastungswert und/oder einer Zykluszahl und/oder einer Betriebsdauer des Moduls (2, 3, 4, 5, 6, 13) durch die Steuerung (27, 37, 47, 57, 137) des mindestens einen Moduls (2, 3, 4, 5, 6, 13),
- Speichern der gewichteten Prozessparameterdaten in dem Datenspeicher (28, 38, 48, 58, 138) des mindestens einen Moduls (2, 3, 4, 5, 6, 13) sowie Senden der gewichteten Prozessparameterdaten an die Steuerung (7) der Vorrichtung (1) zum Speichern in dem Datenspeicher (8) der Vorrichtung (1) durch die Steuerung (27, 37, 47, 57, 137) des mindestens einen Moduls (2, 3, 4, 5, 6, 13),
- zyklisches Bestimmen von Verschleißparameterdaten des mindestens einen austauschbaren Moduls (2, 3, 4, 5, 6, 13) aus den Moduldaten und den gewichteten Prozessparameterdaten, deren Aufsummieren zu einem kumulierten Verschleißparameter und Speichern in dem Datenspeicher (8) der Vorrichtung (1) durch die Steuerung (7) der Vorrichtung (1),
- Generieren, Ausgeben und Speichern einer Analyse- und Handlungsempfehlung in dem Datenspeicher (8) der Vorrichtung (1) durch die Steuerung (7) der Vorrichtung (1), wenn der kumulierte Verschleißparameter einen in dem Datenspeicher (8) der Vorrichtung (1) gespeicherten kritischen Referenzparameter überschreitet.

2. Verfahren nach Anspruch 1, wobei der Verschleiß für wenigstens eines der Module umfassend ein Plastifiziermodul (2), ein Antriebsmodul (3, 13), ein Materialaustragsmodul (4), ein Materialzuführmodul (5) und ein Werkzeugmodul/Objektträgermodul (6) bestimmt wird.

3. Verfahren nach Anspruch 1 oder 2, wobei die Analyse- und Handlungsempfehlung in einer Anzeigevorrichtung (15) ausgegeben und/oder visualisiert wird.

4. Verfahren nach einem der vorhergehenden Ansprüche, wobei die Kommunikationsschnittstellen (9, 29, 39, 49, 59, 69, 139) des mindestens einen Moduls (2, 3, 4, 5, 6, 13) und der Vorrichtung (1) die Daten kabellos übertragen.

5. Verfahren nach einem der vorhergehenden Ansprüche, wobei aus den Moduldaten und den gewichteten Prozessparameterdaten eine Vergleichsspannung mindestens einer der Modulkomponenten ermittelt und als Verschleißparameterdatum verwendet wird.

6. Verfahren nach einem der vorhergehenden Ansprüche, wobei die Verschleißparameterdaten in Zustandsvariablen überführt und in eine Eingabeschicht einer antrainierten Vorrichtung für maschinelles Lernen übertragen werden, wobei vorzugsweise die Vorrichtung für maschinelles Lernen die Analyse- und Handlungsempfehlung ausgibt.

7. Verfahren nach einem der Ansprüche 2 bis 6, wobei als Prozessparameterdaten wenigstens eine der folgenden Prozessparameterdaten umfasst sind und verwendet werden: ein Zählerstand, ein Einspritzdruck, ein Nachdruck, ein Staudruck, ein Drehmoment, eine Drehzahl, ein Belastungswert, eine Vergleichsspannung einer Extruderwelle (10), insbesondere Schneckenwelle, und/oder mindestens einer Antriebswelle, ein Schneckenhub, eine Schließkraft des Werkzeugs (14), eine Soll- und Ist-Position sowie Soll- und Ist-Geschwindigkeit des Werkzeugs (14) oder des Objektträgers (14), ein Soll- und Ist-Druck des Plastifiziermoduls (2), eine Tröpfchengröße oder ein Massevolumen des Materialaustragsmoduls (4), eine Anzahl von zugeführten Fasersträngen, elastische Konstanten der Faserstränge, eine Dichteverteilung der Faserstränge, Materialkennwerte des aktuell verarbeiteten Materials oder einer plastifizierbaren Masse des Materialzuführmoduls (5), Zeit, Zeiträume, Zeitabläufe oder ein Energieverbrauchswert einer Heizung oder Mechanik.

8. Verfahren nach einem der Ansprüche 2 bis 7, wobei ein Handhabungsmodul mit einer Steuerung an dem Materialzuführmodul (5) zur Handhabung der plastifizierbaren Masse verwendet wird und/oder mit einer Steuerung an dem Werkzeugmodul/Objektträgermodul (6) zur Handhabung einer plastifizierten Masse und von Bauteilen verwendet wird.

9. Verfahren nach einem der vorhergehenden Ansprüche, **dadurch gekennzeichnet, dass** es auf mehreren Maschinen durchgeführt wird und zumindest aus einem Teil der folgenden Daten, umfassend
- Moduldaten und/oder
- gewichtete Prozessparameterdaten und/oder
- Verschleißparameterdaten und/oder
- Analyse- und Handlungsempfehlungen
nach gleichen oder ähnlichen Maschinenkonfigurationen, gleichen Prozessen und/oder gleichen oder ähnlichen zu verarbeitenden Materialien Cluster gebildet werden und diese Cluster ausgewertet werden, um durch federated learning Maschinen mit den Ergebnissen der Auswertung zu betreiben.

10. Verfahren nach Anspruch 9, **gekennzeichnet durch** die Schritte:
- Vergleichen der Ergebnisse der Auswertung zumindest teilweise miteinander, vorzugsweise cloud-basiert, und Ermitteln von Vergleichsergebnissen,
- Schärfen der für das Verfahren erforderlichen Daten, umfassend
- gewichtete Prozessparameterdaten und/oder
- Verschleißparameterdaten und/oder
- Analyse- und Handlungsempfehlungen
aufgrund der Vergleichsergebnisse.

11. Vorrichtung (1) zur Verarbeitung plastifizierbarer Massen durch einen zyklischen oder kontinuierlichen Verarbeitungsprozess, wobei die Vorrichtung (1) mindestens ein austauschbares Modul (2, 3, 4, 5, 6, 13) aufweist und wobei die Vorrichtung (1) eine Steuerung sowie Kommunikationsschnittstellen aufweist,
**dadurch gekennzeichnet, dass** die Vorrichtung (1) und das mindestens eine austauschbare Modul (2, 3, 4, 5, 6, 13) jeweils eine Steuerung (27, 37, 47, 57, 137; 7) sowie Kommunikationsschnittstellen (9, 29, 39, 49, 59, 69, 139) zwischen den Steuerungen (27, 37, 47, 57, 137; 7) aufweisen und dass das mindestens eine austauschbare Modul einen Datenspeicher (28, 38, 48, 58, 138) aufweist,
wobei die Vorrichtung dazu eingerichtet, ausgeführt und/oder konstruiert ist, das Verfahren zur Bestimmung von Verschleiß mindestens eines Moduls (2, 3, 4, 5, 6, 13) der Vorrichtung (1) nach einem der vorhergehenden Ansprüche 1 bis 10 durchzuführen.

12. Computerprogrammprodukt mit einem Programmcode, der auf einem Computer lesbaren Medium gespeichert ist, umfassend Befehle, die bewirken, dass die Vorrichtung nach Anspruch 11 das Verfahren nach einem der Ansprüche 1 bis 10 durchführt.

## Claims

1. Method for determining the wear on at least one exchangeable module (2, 3, 4, 5, 6, 13) of a device (1) for processing plastics and other plasticisable materials by a cyclical or continuous processing procedure and for the output of wear-based analysis and action recommendations, wherein the device (1) comprises at least one exchangeable module (2, 3, 4, 5, 6, 13) and wherein the device (1) comprises a control unit and communication interfaces,
comprising a cyclic recording and storage of process parameter data of process parameters, which comprise process-specific information, in a data store (8) of the device, **characterized in that** the device (1) and the at least one exchangeable module (2, 3, 4, 5, 6, 13) each have a control unit (27, 37, 47, 57, 137; 7) and communication interfaces (9, 29, 39, 49, 59, 69, 139) between the control units (27, 37, 47, 57, 137; 7), **characterized by** the steps:
- providing module data, which comprise information regarding module components used, in a data store (28, 38, 48, 58, 138) of the at least one module (2, 3, 4, 5, 6, 13) and sending the module data by means of the control unit (27, 37, 47, 57, 137) of the at least one module (2, 3, 4, 5, 6, 13) to the control unit (7) of the device (1) for storage in the data store (8) of the device (1),
- cyclical acquisition and storage of process parameter data of process parameters of the device, said process parameter data comprising process-specific and/or material-specific information, in the data store (28, 38, 48, 58, 138) of the at least one module (2, 3, 4, 5, 6, 13) during the processing procedure by the control unit (27, 37, 47, 57, 137) of the at least one module (2, 3, 4, 5, 6, 13),
- weighting the process parameter data with a capacity utilisation value and/or a cycle count and/or an operating duration of the module (2, 3, 4, 5, 6, 13) by the control unit (27, 37, 47, 57, 137) of the at least one module (2, 3, 4, 5, 6, 13),
- storing the weighted process parameter data in the data store (28, 38, 48, 58, 138) of the at least one module (2, 3, 4, 5, 6, 13) and sending the weighted process parameter data to the control unit (7) of the device (1) for storage in a data store (8) of the device (1) by means of the control unit (27, 37, 47, 57, 137) of the at least one module (2, 3, 4, 5, 6, 13),
- cyclical determination of wear parameter data regarding the at least one exchangeable module (2, 3, 4, 5, 6, 13) from the module data and the weighted process parameter data, their summation to a cumulative wear parameter and storage in the data store (8) of the device (1) by means of the control unit (7) of the device (1),
- generating, outputting and storing an analysis and action recommendation in the data store (8) of the device (1) by the control unit (7) of the device (1) when the cumulative wear parameter exceeds a critical reference parameter stored in the data store (8) of the device (1).

2. Method according to claim 1, wherein the wear is determined for at least one of the modules comprising a plasticising module (2), a drive module (3, 13), a material output module (4), a material feed module (5) and a mold module/object carrier module (6).

3. Method according to claim 1 or 2, wherein the analysis and action recommendation is output and/or visualised in a display device (15).

4. Method according to one of the preceding claims, wherein the communication interfaces (9, 29, 39, 49, 59, 69, 139) of the at least one module (2, 3, 4, 5, 6, 13) and of the device (1) transfer the data wirelessly.

5. Method according to one of the preceding claims, wherein from the module data and the weighted process parameter data, an equivalent stress of at least one of the module components is ascertained and used as a wear parameter datum.

6. Method according to one of the preceding claims, wherein the wear parameter data are converted into status variables and transferred into an input layer of a trained device for machine learning, wherein preferably the device for machine learning outputs the analysis and action recommendation.

7. Method according to one of the claims 2 to 6, wherein as process parameter data at least one of the following process parameter data are included and used: a counter value, an injecting pressure, a holding pressure, a back pressure, a torque, a rotary speed, a loading value, an equivalent stress on an extruder shaft (10), in particular a screw shaft, and/or on at least a drive shaft, a screw travel, a closing force of the mold (14), a target and actual position as well as a target and actual speed of the mold (14) or the object carrier (14), a target and actual pressure of the plasticising module (2), a droplet size or a mass volume of the material output module (4), a number of fibre strands fed in, elastic constants of the fibre strands, a density distribution of the fibre strands, material characteristic values of the currently processed material or of a plasticisable material of the material feed module (5), time, time periods, time sequences or an energy usage value of a heating system or mechanism.

8. Method according to one of the claims 2 to 7, wherein a handling module with a control unit on the material feed module (5) is used for handling the plasticisable material and/or with a control unit on the mold module/object carrier module (6) is used for handling a plasticised material and components.

9. Method according to one of the preceding claims, **characterised in that** it is carried out on a plurality of machines and at least from a part of the following data, comprising
- module data and/or
- weighted process parameter data and/or
- wear parameter data and/or
- analysis and action recommendations
according to identical or similar machine configurations, identical processes and/or identical or similar materials that are to be processed, clusters are formed and these clusters are evaluated in order to operate federated learning machines with the results of the evaluation.

10. Method according to claim 9, **characterised by** the steps:
- comparing the results of the evaluation at least partially with one another, preferably cloud-based, and ascertaining comparison results,
- enhancing the data required for the method, comprising
- weighted process parameter data and/or
- wear parameter data and/or
- analysis and action recommendations
on the basis of the comparison results.

11. Device (1) for processing plasticisable materials by way of a cyclical or continuous processing procedure, the device (1) comprising at least one exchangeable module (2, 3, 4, 5, 6, 13) and the device (1) having a control unit and communication interfaces, **characterized in that** the device (1) and the at least one exchangeable module (2, 3, 4, 5, 6, 13) each have a control unit (27, 37, 47, 57, 137; 7) and communication interfaces (9, 29, 39, 49 , 59, 69, 139) between the control units (27, 37, 47, 57, 137; 7) and that the at least one exchangeable module has a data store (28, 38, 48, 58, 138),
wherein the device is equipped, configured and/or constructed to carry out the method for determining the wear of at least one module (2, 3, 4, 5, 6, 13) of the device (1) according to one of the preceding claims 1 to 10.

12. Computer program product comprising program code stored on a computer-readable medium, including instructions which cause the apparatus according to claim 11 to perform the method according to any one of claims 1 to 10.

## Revendications

1. Procédé de détermination de l'usure d'au moins un module interchangeable (2, 3, 4, 5, 6, 13) d'un dispositif (1) pour le traitement de matières plastiques et autre masses plastifiables suivant un processus de traitement continu ou cyclique et pour l'émission de recommandations d'analyse et d'action basées sur l'usure, le dispositif (1) présentant au moins un module interchangeable (2, 3, 4, 5, 6, 13) et le dispositif (1) présentant au moins une commande ainsi que des interfaces de communication,
comprenant une mesure et un enregistrement cycliques de données de paramètres de procédé qui comprennent des informations spécifiques au procédé dans une mémoire de données (8) du dispositif,
**caractérisé en ce que** le dispositif (1) et le ou les module(s) (2, 3, 4, 5, 6, 13) interchangeable(s) présentent à chaque fois une commande (27, 37, 47, 57, 137; 7) ainsi que des interfaces de communication (9, 29, 39, 49, 59, 69, 139) entre les commandes (27, 37, 47, 57, 137; 7), **caractérisé par** les étapes consistant à:
- mettre à disposition des données de module qui comprennent des informations sur des composants de module utilisés, dans une mémoire de données (28, 38, 48, 58, 138) du ou des module(s) (2, 3, 4, 5, 6, 13) et envoyer les données de module à la commande (7) du dispositif (1) pour leur enregistrement dans la mémoire de données (8) du dispositif (1) par la commande (27, 37, 47, 57, 137) du ou des module(s) (2, 3, 4, 5, 6, 13),
- mesure et enregistrement cycliques de données de paramètres de processus du dispositif, lesquelles données de paramètres de processus comprennent des informations spécifiques au processus et/ou spécifiques au matériau, dans la mémoire de données (28, 38, 48, 58, 138) du ou des module(s) (2, 3, 4, 5, 6, 13), pendant le processus de traitement, par la commande (27, 37, 47, 57, 137) du ou des module(s) (2, 3, 4, 5, 6, 13),
- pondérer les données de paramètres de processus avec une valeur d'utilisation et/ou un nombre de cycles et/ou une durée de fonctionnement du module (2, 3, 4, 5, 6, 13) au moyen de la commande (27, 37, 47, 57, 137) du ou des module(s) (2, 3, 4, 5, 6, 13),
- enregistrer les données de paramètres de processus pondérées dans la mémoire de données (28, 38, 48, 58, 138) du ou des module(s) (2, 3, 4, 5, 6, 13) et envoyer des données de paramètres de processus pondérées à la commande (7) du dispositif (1) pour leur enregistrement dans la mémoire de données (8) du dispositif (1) par la commande (27, 37, 47, 57, 137) du ou des module(s) (2, 3, 4, 5, 6,13),
- déterminer cycliquement des données de paramètres d'usure du ou des module(s) interchangeable(s) (2, 3, 4, 5, 6, 13) à partir des données de module et des données de paramètres de processus pondérées, en faire la somme pour obtenir un paramètre d'usure cumulé et enregistrer celui-ci dans la mémoire de données (8) du dispositif (1) à l'aide de la commande (7) du dispositif (1),
- générer, émettre et enregistrer une recommandation d'analyse et d'action dans la mémoire de données (8) du dispositif (1) à l'aide de la commande (7) du dispositif (1), lorsque le paramètre d'usure cumulé excède un paramètre de référence critique enregistré dans la mémoire de données (8) du dispositif (1).

2. Procédé selon la revendication 1, dans lequel l'usure est déterminée pour au moins l'un des modules comprenant un module de plastification (2), un module d'entraînement (3, 13), un module d'application de matériau (4), un module d'amenée de matériau (5) et un module d'outil/module porte-outil (6).

3. Procédé selon la revendication 1 ou 2, dans lequel la recommandation d'analyse et d'action est émise dans un dispositif d'affichage (15) et/ou visualisée.

4. Procédé selon l'une des revendications précédentes, dans lequel les interfaces de communication (9, 29, 39, 49, 59, 69, 139) du ou des modules (2, 3, 4, 5, 6, 13) et du dispositif (1) transmettent les données sans fil.

5. Procédé selon l'une des revendications précédentes, dans lequel une tension de comparaison d'au moins l'un des composants du module est déterminée à partir des données de module et des données de paramètres de processus pondérées et est utilisée comme date du paramètre d'usure.

6. Procédé selon l'une des revendications précédentes, dans lequel les données de paramètres d'usure sont transformées en variables d'état et sont transmises à une couche d'entrée d'un dispositif entraîné pour un apprentissage machine, le dispositif pour l'apprentissage machine émettant de préférence la recommandation d'analyse et d'action.

7. Procédé selon l'une des revendications 2 à 6, dans lequel l'une des données de paramètres de processus suivantes est comprise en tant que données de paramètres de processus : un relevé du compteur, une pression d'injection, une pression ultérieure, une pression dynamique, un couple de rotation, un nombre de tours, une valeur de charge, une tension de comparaison d'un arbre d'extrusion (10), en particulier un arbre de vis sans fin, et/ou au moins un arbre d'entraînement, un pas de vis sans fin, une force de fermeture de l'outil (14), une position de consigne et une position réelle ainsi qu'une vitesse de consigne et une vitesse réelle de l'outil (14) ou du porte-objet (14), une pression de consigne et une pression réelle du module de plastification (2), une grosseur de gouttes ou un volume massique du module d'application de matériau (4), un nombre de brins de fibre fournis, des constantes élastiques des brins de fibre, une distribution de la densité des brins de fibre, des valeurs caractéristiques du matériau en cours de traitement ou d'une masse plastifiable préparée du module d'amenée de matériau (5), le temps, des périodes de temps, des temps écoulés ou des valeurs de consommation d'énergie d'un chauffage ou de la mécanique.

8. Procédé selon l'une des revendications 2 à 7, dans lequel est utilisé un module de manipulation avec une commande au niveau du module d'amenée de matériau (5) pour manipuler la masse plastifiable et/ou avec une commande au niveau du module d'outil/module porte-objet (6) pour la manipulation d'une masse plastifie et de pièces.

9. Procédé selon l'une des revendications précédentes, **caractérisé en ce qu'**il est mis en oeuvre sur plusieurs machines et, au moins à partir d'une partie des données suivantes, parmi lesquelles :
- des données de module et/ou
- des données de paramètres de processus pondérées et/ou
- des données de paramètres d'usure et/ou
- des recommandations d'analyse et d'action
suivant des configurations de machine identiques ou similaires, des processus identiques et/ou des matériaux à traiter identiques ou similaires, des groupes sont formés et ces groupes sont évalués pour actionner des machines par apprentissage fédéré avec les résultats de l'évaluation.

10. Procédé selon la revendication 9, **caractérisé par** les étapes suivantes :
- comparaison des résultats de l'évaluation au moins partiellement entre eux, de préférence sur la base d'un cloud, et détermination des résultats de la comparaison,
- affinage des données nécessaires pour le procédé, comprenant
- des données de paramètres de processus pondérées et/ou
- des données du paramètre d'usure et/ou
- des recommandations d'analyse et de manipulation
sur la base des résultats de la comparaison.

11. Dispositif (1) pour le traitement de masses plastifiables suivant un processus de traitement cyclique ou continu, dans lequel le dispositif (1) présente au moins un module interchangeable (2, 3, 4, 5, 6, 13) et dans lequel le dispositif (1) présente une commande ainsi qu'une interface de communication,
**caractérisé en ce que** le dispositif (1) et le ou les module(s) interchangeable(s) (2, 3, 4, 5, 6, 13) présentent chacun une commande (27, 37, 47, 57, 137; 7) ainsi que des interfaces de communication (9, 29, 39, 49, 59, 69, 139) entre les commandes (27, 37, 47, 57, 137; 7) et **en ce que** le ou les module(s) interchangeable(s) présente(nt) une mémoire de données (28, 38, 48, 58, 138),
dans lequel le dispositif est configuré, réalisé et/ou construit pour mettre en oeuvre le procédé de détermination d'usure d'au moins un module (2, 3, 4, 5, 6, 13) du dispositif (1) selon l'une des revendications précédentes 1 à 10.

12. Produit à programme d'ordinateur avec un code programme, qui est enregistré sur un support lisible par un ordinateur, comprenant des commandes qui ont pour effet que le dispositif selon la revendication 11 met en oeuvre le procédé selon l'une des revendications 1 à 10.
